# EUROPEAN PATENT APPLICATION

(11) **EP 2 671 623 A1**
(43) Date of publication of application: **11.12.2013**
(21) Application number: 12290194.5
(22) Date of filing: 08.06.2012
(51) Int. Cl.: B01D 53/00, G01F 1/34, E21B 47/10

(54) **Method and arrangement for preventing hydrocarbon based deposition**

(71) Applicant: Services Petroliers Schlumberger (SPS), 75007 Paris (FR); Schlumberger Technology B.V. (STBV), 2514 JG The Hague (NL); Schlumberger Holdings Limited (SHL), Tortola (VG); PRAD Research and Development Limited, Tortola 1110 (VG)
(72) Inventor: Korkin, Roman, Princeton Junction, NJ 08550 (US); Zakharov, Lev, Sandsli, 5862 Bergen (NO); Zhdaneev, Oleg, Sandsli, 5862 Bergen (NO)
(74) Representative: Rzaniak, Martin

(57) **Abstract**

Method for preventing hydrocarbon based deposition in a multiphase fluid mixture flowing in a pipe section, said mixture being susceptible to the formation of hydrate and wax under given thermodynamic conditions, comprising:
- flowing the multiphase fluid mixture (13) in a pipe section (21) having a measurement section (22);
- irradiating the multiphase fluid mixture (13) flowing into the measurement section (22) with a radiation having a spectrum comprising at least three distinct energy levels;
- measuring (S11) the attenuation of the radiation transmitted through the measurement section (22) of the multiphase fluid mixture (13);
- estimating a solution triangle and an operating point (OP) based on said attenuation measurements, said solution triangle comprising an oil apex (AP_{O}) and a water apex (AP_{W});
- measuring a differential pressure of the multiphase fluid mixture in the measurement section (22);
- repeating over time the attenuation and pressure measurement steps, and solution triangle and operating point estimation step;

wherein the method for preventing hydrocarbon based deposition further comprises:
- detecting over time a shift of the operating point towards said oil or water apex in dependence on the hydrocarbon based deposition;
- detecting over time whether a variation of the differential pressure is outside a differential pressure range, respectively; and
- initiating at least one prevention measure (S13, S16) when detecting a correlation between said shift of the operating point (OP) towards oil or water apex and the differential pressure being outside the differential pressure range (S12, S14, S17).

## Description

### TECHNICAL FIELD

The invention relates generally to the field of measurement of fluid properties using a multiphase flow meter combining a Venturi meter or the like and a nuclear fraction meter. More particularly, an aspect relates to a method for preventing hydrocarbon based deposition, for example hydrate and wax formation. Another aspect relates to an arrangement for preventing hydrocarbon based deposition. Such a method and system may be used, in particular but not exclusively, in oilfield related applications in extreme low temperature, e.g. arctic conditions where temperature may reach -60°C. As an example, such oilfield related applications may relates to the determination of phase contents in a multiphase fluid mixture, and subsequently to infer fluid phase fraction and flow rates of a hydrocarbon effluent flowing out of a geological formation into a well that has been drilled for the purpose of hydrocarbon exploration and production.

### BACKGROUND OF THE INVENTION

US 5,937,894 describes a method for producing and/or transporting by pipeline, from a location such as a reservoir to a point of destination, a multi-phase fluid susceptible to the formation of hydrates under given thermodynamic conditions. During production and/or transportation, at least one relationship is determined between at least two physical parameters associated with hydrate formation, such as the pressure P, the temperature T and/or a parameter associated with the composition of the fluid or the composition of the fluid itself, the said relationship defining at least one range within which hydrates form. At least one of the physical parameters is measured and, using the relationship and/or the established formation range and a processing and control device, at least one of the physical parameters is adjusted in order to bring and/or maintain the fluid outside the hydrate formation range.

There is a need to maintain the multiphase flow measurements accuracy in extremely low temperatures, e.g. temperatures corresponding to arctic conditions.

### SUMMARY OF THE INVENTION

It is an object of the present invention to propose a method and/or arrangement for preventing hydrocarbon based deposition that overcomes one or more of the limitations of the existing methods and/or apparatuses/systems for preventing hydrate formation.

According to one aspect, there is provided a method for preventing hydrocarbon based deposition in a multiphase fluid mixture flowing in a pipe section, said mixture being susceptible to the formation of hydrate and wax under given thermodynamic conditions, comprising:
- flowing the multiphase fluid mixture in a pipe section having a measurement section;
- irradiating the multiphase fluid mixture flowing into the measurement section with a radiation having a spectrum comprising at least two distinct energy levels;
- measuring the attenuation of the radiation transmitted through the measurement section of the multiphase fluid mixture;
- estimating a solution triangle and an operating point based on said attenuation measurements, said solution triangle comprising an oil apex and a water apex;
- measuring a differential pressure of the multiphase fluid mixture in the measurement section;
- repeating over time the attenuation and pressure measurement steps, and solution triangle and operating point estimation step;
   wherein the method for preventing hydrocarbon based deposition further comprises:
- detecting over time a shift of the operating point towards said oil or water apex in dependence on the hydrocarbon based deposition;
- detecting over time whether a variation of the differential pressure is outside a differential pressure range, respectively; and
- initiating at least one prevention measure when detecting a correlation between said shift of the operating point towards oil or water apex and the differential pressure being outside the differential pressure range.

Initiating the prevention measure may comprise heating at least a portion of the pipe section.

Initiating the prevention measure may comprise injecting a chemical product inhibiting hydrocarbon based deposition into the multiphase fluid mixture.

The chemical product may be injected upstream the measurement section.

The method for preventing hydrocarbon based deposition may further comprise stopping the prevention measure when the multiphase fluid mixture is caused to be outside a hydrocarbon based deposition range.

The hydrocarbon based deposition may result from hydrate formation in the multiphase fluid mixture, or from wax or asphaltene formation in the multiphase fluid mixture.

The two distinct energy levels may be chosen among the energy levels 32 keV, 81 keV and 356 keV provided by a nuclear chemical source made of barium isotope Ba133.

According to another aspect, there is provided an application of said method for preventing hydrocarbon based deposition to the production of hydrocarbon in arctic conditions.

According to a further aspect, there is provided an arrangement for preventing hydrocarbon based deposition in a multiphase fluid mixture flowing in a pipe section, said mixture being susceptible to the formation of hydrate and wax under given thermodynamic conditions, comprising:
- a radiation source arranged to emit a radiation having a spectrum comprising at least two distinct energy levels;
- a pipe section through which the multiphase fluid mixture flows comprising a measurement section, said measurement section being coupled to said radiation source;
- a detector coupled to said measurement section and arranged to detect the radiation that has passed through said multiphase fluid mixture, the detector providing attenuation measurements;
- pressure measurement sensor for measuring a differential pressure of the multiphase fluid mixture in the measurement section;
- prevention means for causing the multiphase fluid mixture to be outside a hydrocarbon based deposition range;
   wherein the detector and sensor are coupled to a control and data acquisition arrangement arranged to estimate a solution triangle and an operating point based on said attenuation measurements, said solution triangle comprising an oil apex and a water apex, and to activate said prevention means when detecting a correlation between a shift of said operating point towards oil or water apex and the differential pressure being outside a differential pressure range.

The prevention means may comprise a thermal management arrangement comprises an insulation housing and heating elements for insulating and heating at least the measurement section.

The prevention means may comprise a chemical injection arrangement injecting a chemical product inhibiting hydrocarbon based deposition into the multiphase fluid mixture.

The prevention means may be positioned upstream the measurement section.

The measurement section may be selected from the group consisting of: a Venturi, a V-cone, an orifice plate, and a measurement section having a geometry with a variable cross section area.

The radiation source may be a nuclear chemical source or an x-ray generator.

The radiation source may be made of barium isotope Ba133 emitting at three distinct energy levels 32 keV, 81 keV and 356 keV.

The multiphase fluid mixture may be a hydrocarbon effluent comprising gas, oil, and water.

The invention enables tackling the challenge of multiphase flow metering at extremely low ambient temperatures where the formation of hydrates and/or waxes is favorized such as to decrease the efficient diameter of the pipe section, in particular the Venturi throat. Thus, the invention is an improvement over conventional multiphase flow metering whose performance might be dramatically affected in arctic conditions.

The invention enables timely detecting precipitation/deposition in the Venturi and proposes preventive measures affecting the multiphase fluid mixture in real-time at line conditions, and thus avoiding wrong data interpretation and incorrect hydrocarbon reservoir management actions.

Other advantages will become apparent from the hereinafter description.

### BRIEF DESCRIPTION OF THE DRAWINGS

The present invention is illustrated by way of examples and not limited to the accompanying drawings, in which like references indicate similar elements:
- FIG. 1 schematically shows an onshore hydrocarbon well location illustrating various application examples of a multiphase flow meter that is prevented from hydrate and/or wax clogging;
- FIG. 2 is a cross-section view schematically illustrating an embodiment of the multiphase flow meter;
- FIG. 3 schematically illustrates the principle of determining the flow rates of a multiphase flow mixture;
- FIGS. 4 and 5 schematically illustrate a thermal management arrangement associated with the multiphase flow meter;
- FIG.' 6 schematically illustrates a chemical injection arrangement associated with the multiphase flow meter;
- FIG. 7 schematically illustrates an embodiment of the method for preventing hydrate and wax formation; and
- FIGS. 8 and 9 graphically illustrate how displacements of the operation point in the multiphase fraction solution triangle are used to detect the appearance of hydrate formation and wax formation, respectively.

### DETAILED DESCRIPTION OF THE INVENTION

In the following description, the terminology "multiphase fluid mixture" has a broad meaning. In the oilfield related applications, it includes a broad range of hydrocarbon effluent compositions. It may be a mixture comprising multiple phases, for example oil, gas and water. The composition of the mixture may vary from heavy oil and high water cut to high gas fraction. It may also be a mixture comprising a single phase in specific conditions, resulting in a separation between the components constituting said phase, for example in conditions above the bubble point, or in non-isobaric or/and non-isothermal conditions. In such conditions, the single phase becomes biphasic and drops heavy components. Moreover, it may also be a 4-phases mixture, the fourth phase being considered to be either the water salinity or sulfur mass fraction (in oil, gas, and water), or injected/produced water ratio (if water is injected into the hydrocarbon reservoir for pressure maintenance purposes), or injected/produced gas ratio (if gas is injected into the hydrocarbon reservoir), etc...

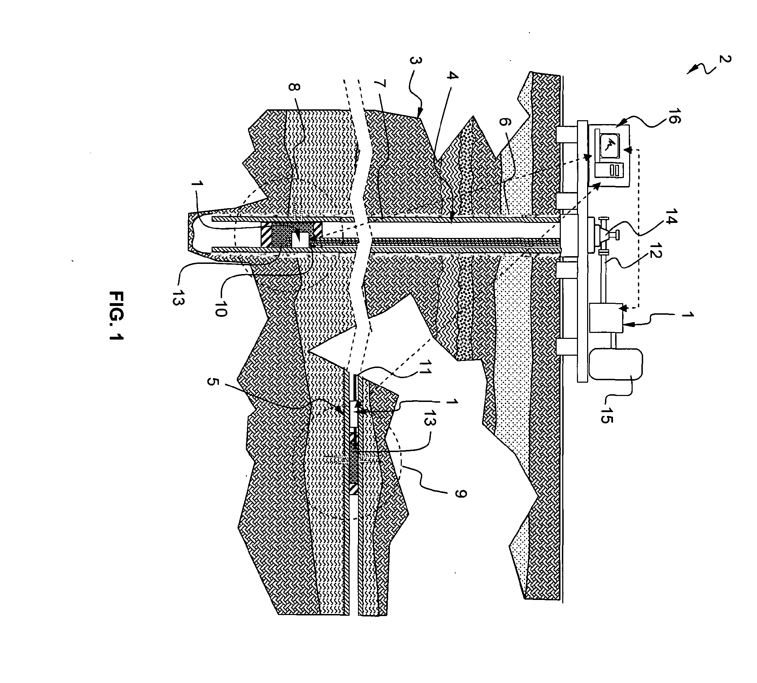

FIG. 1 schematically shows an onshore hydrocarbon well location and equipments 2 above a hydrocarbon geological formation 3 after drilling operation has been carried out, after a drill pipe has been run, and eventually, after cementing, completion and perforation operations have been carried out, and exploitation has begun. The well is beginning producing hydrocarbon, e.g. oil and/or gas. At this stage, the well bore comprises substantially vertical portion 4 and may also comprise horizontal or deviated portion 5. The well bore 4 is either an uncased borehole, or a cased borehole, or a mix of uncased and cased portions.

The cased borehole portion comprises an annulus 6 and a casing 7. The annulus 6 may be filled with cement or an open-hole completion material, for example gravel pack. Downhole, a first 8 and second 9 producing sections of the well typically comprises perforations, production packers and production tubings 10, 11 at a depth corresponding to a reservoir, namely hydrocarbon-bearing zones of the hydrocarbon geological formation 3. A fluid mixture 13 flows out of said zones 8, 9 of the hydrocarbon geological formation 3. The fluid mixture 13 is a multiphase hydrocarbon fluid mixture comprising a plurality of fluid fractions (water, oil, gas) and a plurality of constituting elements (water, various hydrocarbon molecules, impurities). The fluid mixture 13 flows downhole through the production tubings 10, 11 and out of the well from a well head 14. The well head 14 is coupled to surface production arrangement 15 by a surface flow line 12. The surface production arrangement 15 may typically comprise a chain of elements connected together, e.g. a pressure reducer, a heat exchanger, a pumping arrangement, a separator, a tank, a burner, etc... (not shown in details). In one embodiment, one or more multiphase flow meter 1 may be installed within the surface flow line 12 or connected to the surface flow line 12 or connected downhole to the production tubings 10, 11.

A control and data acquisition arrangement 16 is coupled to the multiphase flow meter 1, and/or to other downhole sensors (not shown) and/or to active completion devices like valves (not shown). The control and data acquisition arrangement 16 may be positioned at the surface. The control and data acquisition arrangement 16 may comprise a computer. It may also comprise a satellite link (not shown) to transmit data to a client's office. It may be managed by an operator. The control and data acquisition arrangement 16 may determine the total flowrate, the flow rates of the individual phases of the multiphase fluid mixture, the density of the multiphase fluid mixture, the temperature, the pressure and other values based on the measurements provided by the various apparatuses, sensors and detectors as explained in details hereinafter.

The precise design of the down-hole producing arrangement and surface production/control arrangement is not germane to the present invention, and thus these arrangements are not described in detail herein.

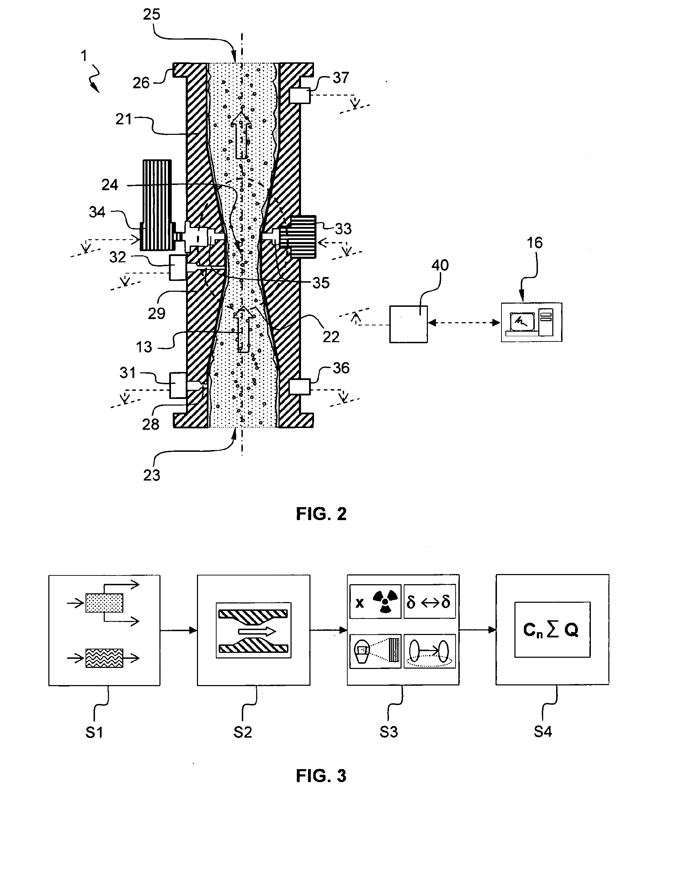

FIG. 2 is a cross section view schematically illustrating an embodiment of the multiphase flow meter 1 that combines a Venturi flow meter and a fraction meter using a gamma rays source. The multiphase flow meter 1 determines the flow rates of the multiphase fluid mixture, namely a commingled flow of different phases for example gas, oil and water, without separating the phases.

It is to be noted that, though, FIG. 2 shows various entities depicted in the same longitudinal plane (i.e. the plane of the cross-section view), this is only for a mere drawing simplicity reason. It may be apparent for the skilled person that said entities may be positioned in different longitudinal planes.

The multiphase flow meter 1 comprises a pipe section 21 which internal diameter gradually decreases from an upstream part 23 to a throat 24, forming a convergent Venturi, then gradually increases from the throat 24 to a downstream part 25. The convergent Venturi induces a pressure drop between the upstream part 23 and the downstream part 25 encompassing the throat 24. The portion of the pipe around the Venturi throat 24 constitutes the measuring section 22. The pipe section 21 can be coupled to any flowing line 10, 11, 12 by any appropriate connection arrangement, for example a flange 26 having a bolt-hole pattern and a gasket profile (not shown in details). The multiphase fluid mixture 13 flows through the upstream part 23, the throat 24 and the downstream part 25 of the pipe section 21 as indicated by the arrow. Further, optionally, the pipe section 21 may be coupled to a flow conditioner for achieving proper homogenization of the mixture, e.g. a blind T pipe section (not shown) at the upstream part 23 or the downstream part 25.

Furthermore, the multiphase flow meter 1 comprises various sensing arrangements to measure various characteristic values of the multiphase fluid mixture 13 flowing into the pipe section 21.

The Venturi flow meter estimates a total flow rate of the multiphase fluid mixture based on differential pressure measurement. The pipe section 21 is provided with pressure tappings 28, 29. A first pressure tapping 28 is positioned in the upstream part 23. A first pressure sensor 31 is associated with the first pressure tapping 28 for measuring the pressure of the multiphase fluid mixture 13 flowing in the upstream part 23. A second pressure tapping 29 is positioned at the throat 24. A second pressure sensor 32 is associated with the second pressure tapping 29 for measuring the pressure of the multiphase fluid mixture 13 flowing at the throat 24. Thus, the pressure drop of the multiphase fluid mixture between the upstream part and the throat due to the convergent Venturi can be measured.

The fraction meter for fluid phase fraction determination comprises a radiation source 33 and a detector 34 coupled to the pipe section 21. The source 33 and the detector 34 may be coupled to the control and data acquisition arrangement 16 through an electronic arrangement 40. The electronic arrangement 40 may be positioned closely to the multiphase flow meter 1. It may provide electrical power and plays the role of an interface with the distance control and data acquisition arrangement 16.

The source 33 is arranged to emit a radiation beam having a defined radiation spectrum as explained in details hereinafter. The source may be a gamma rays source, for example a chemical radioactive source made of barium isotope Ba133 that emits gamma photons across a range of energies from several keV to approximately thousand keV (e.g. 15 keV to 600 keV). A barium isotope Ba133a gamma ray source 33 generates photons which energies are distributed in a spectrum with several peaks. The main peaks of the radioisotope Barium 133 source have three different energy levels, namely 32 keV, 81 keV and 356 keV. Alternatively, the source 33 may be an x-rays generator that emits x-rays in a similar range of energies.

The detector 34 is a radiation detector arranged to detect the gamma ray or the x-ray radiations that have passed through the multiphase fluid mixture 13. The detector 34 can be any type of radiation detector capable of monitoring gamma ray or the x-ray radiations. The radiation detector 34 may be for example a scintillation counter including a scintillation crystal (e.g. doped Sodium lodide Nal(TI)) coupled to a photomultiplier. The detector 34 may be further coupled to a multichannel pulse height analyzer or MCA. The MCA may be integrated to the detector 34. The multichannel analyzer may generate a digital bit or count, or similar signal corresponding to the electrical pulse from the photomultiplier having a selected amplitude, or having amplitude within a selected amplitude range. Typically, an output of the MCA multichannel analyzer includes numbers of counts for each of a selected number of energy windows or ranges detected by the detector 34 within a determined time interval.

The pipe section 21 comprises the measurement section 22 where the properties of the multiphase fluid mixture 13 are measured. The measurement section 22 is coupled to the source 33 and the detector 34 by means of appropriate windows 35. The source 33 and the detector 34 are diametrically positioned on each opposite sides of the measurement section 28 so as to substantially face each other. The radiation beam (gamma or x-ray photons) traverses the multiphase fluid mixture 13 at or close to the throat 24 of the pipe section 21 (Venturi).

The windows 35 are sealed against the pipe section 21 and are transparent to the radiations in the energy spectrum used by the source and the detector. For example, the windows 35 are made of boron carbide (B₄C) and have an appropriate thickness (e.g. a few dozen of millimeters) to withstand the pressure conditions.

The pressure sensors 31, 32, the source 33 and detector 34, the temperature sensor 36, 37 are coupled to the control and data acquisition arrangement 16. The interface 40 that may be connected between said various entities and the control and data acquisition arrangement 16 may comprise an analog-to-digital converter means, multiplexing means, wired or wireless communication means and electrical power means. It is to be noted that most of the connections (dotted lines) between the entities and the interface 40 / the control and data acquisition arrangement 16 have not been completely depicted for a mere drawing clarity reason.

The radiation spectrum comprises three distinct energy peaks (local maxima of numbers of photons at each of three distinct energy levels), namely two low energy peaks and a high energy peak that are used for the determination of the fluid phase fraction. In particular, in oilfield applications, the low energy peak enables enhancing sensitivity of the measurements to discriminate between oil and water. Phase fractions (oil, water, and gas) may be determined by analyzing the attenuation of the gamma photons in the energy bands 32 keV, 81 keV and 356 keV (e.g. with a source made of barium isotope Ba133).

The control and data acquisition arrangement 16 may determine the total flow rate, the flow rates of the individual phases of the multiphase fluid mixture, the density of the multiphase fluid mixture, the temperature and other values based on the measurements provided by the various sensors and detectors that have been described hereinbefore.

FIG. 3 schematically illustrates the principle of determining the flow rate of the multiphase fluid mixture. This principle is well known in the art, for example such a principle is described in WO 99/10712 where a traditional chemical radioactive source is used. The stream of the multiphase flow mixture is pre-conditioned (step S1). The multiphase flow mixture is passed through the measurement section of the pipe section and differential pressure is measured (step S2). Though, the measurement section may be a Venturi flow meter, what is important is the generation of a pressure drop when the multiphase fluid mixture flows through the multiphase flow meter. This could also be obtained with a V-cone, or orifice plate type flow meter, or any geometry with a variable cross section area. Other measurements are performed (step S3) to determine parameters characterizing each individual phases (liquid hydrocarbon/oil, water, gas). The total flow rate, the flow rates of each individual phase are calculated (step S4) based on said measurements, said parameters and also the fluid model and taking into consideration some correction factor related to the composition of the multiphase fluid mixture flowing out of the producing sections of the well.

In regions where extremely low temperature may be encountered (from around -20°C to around -60°C), e.g. in arctic regions, the temperature of the multiphase fluid mixture 13 may result in the formation of hydrate and/or wax in the multiphase fluid mixture 13. Such conditions may typically occur in the well head 14, in the surface production arrangement 15, in the surface flow line 12 and/or in the multiphase flow meter 1 installed at the surface or close to the surface where the temperature of the multiphase fluid mixture 13 may decrease significantly. Such extremely low temperature conditions may result in undesirable metering conditions, and even to clogging of the multiphase flow meter 1, and eventually clogging of the production pipe by precipitation and deposition of hydrate and/or wax in pipe sections.

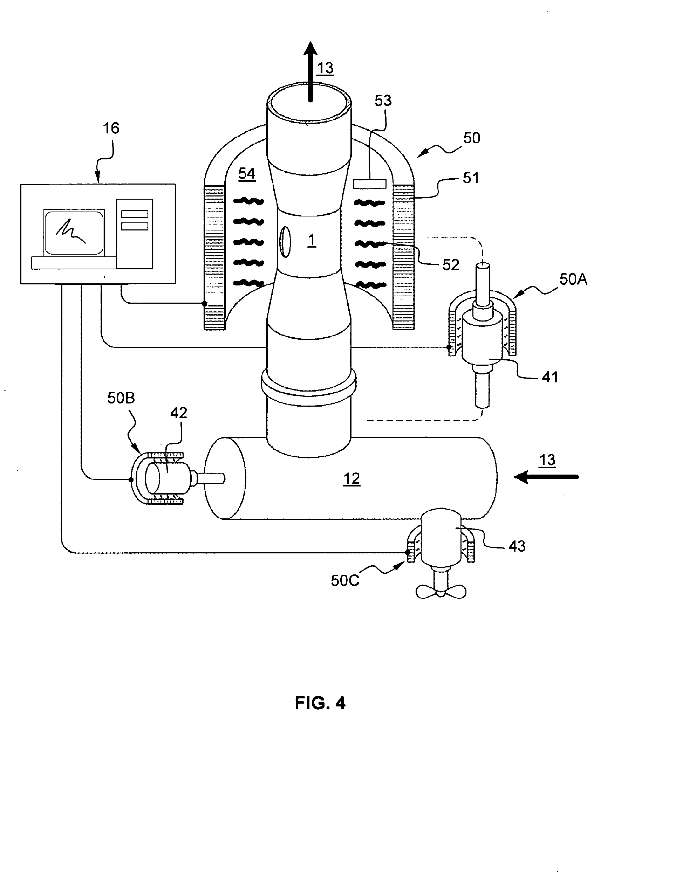

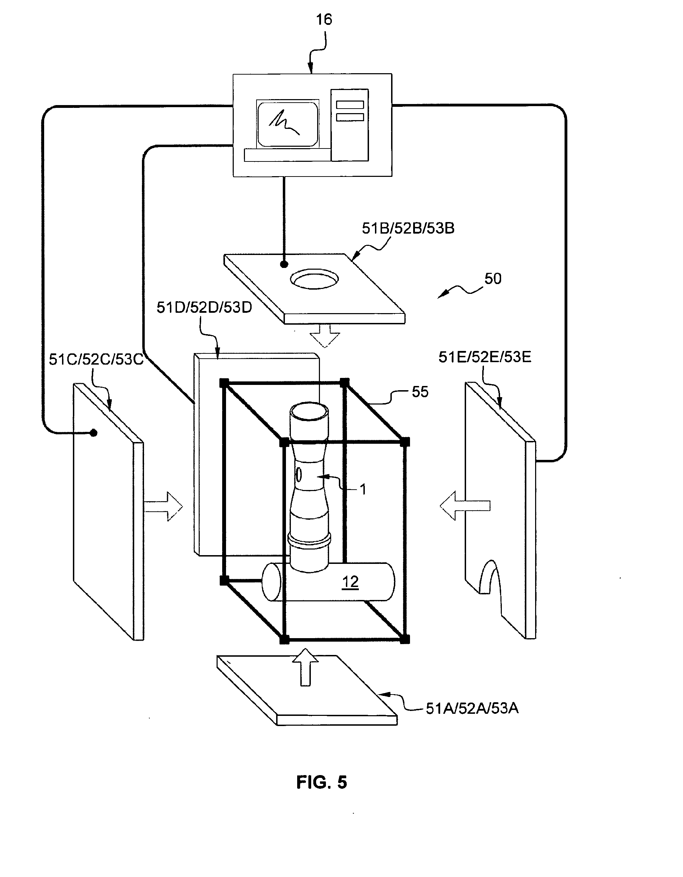

FIGS. 4 and 5 schematically illustrate a thermal management arrangement 50 associated with the multiphase flow meter 1. The thermal management arrangement 50 may also be associated locally as sub-arrangements 50A, 50B and 50 C with other elements of the surface production arrangement, for example a sampling unit 41, a sensor 42, and/or a control valve 43, respectively.

The thermal management arrangement 50 comprises an insulation housing 51, heating elements 52 and a temperature sensor 53. The insulation housing 51 defines a chamber sealed relatively to the harsh environment. The chamber may be filled with a gas 54, for example having a low thermal conductivity like an inert gas. Alternatively, the chamber may be pumped so as to reach a partial vacuum sufficient to limit heat exchange with the environment (low or medium vacuum, e.g. pressure greater than 100mPa). The heating elements 52 and the temperature sensor 53 may be integrated on the internal surface of the insulation housing 51. The heating elements 52 and the temperature sensor 53 are coupled to the control and data acquisition arrangement 16 (directly, or indirectly via the electronic arrangement 40). The heating elements 52 are used during the implementation of the active prevention measures as explained hereinafter, while the insulation housing is a passive prevention measure minimizing heat dissipation of the multiphase fluid mixture, pipe and meter to the environment. The operation of the heating elements 52 is controlled (activated/stopped) by the control and data acquisition arrangement 16.

Similarly, all the local thermal management sub-arrangements 50A, 50B and 50 C are coupled to the control and data acquisition arrangement 16.

The thermal management arrangement 50 enables controlling the temperature in the associated pipe section within a ± 5°C temperature range.

As depicted as an exploded view in FIG. 5, the thermal management arrangement 50 may be easily integrated into a standard skid 55. The thermal management arrangement 50 comprises multiple sections 51A/52A/53A (bottom section), 51 B/52B/53B (top section), 51C/52C/53C (right section), 51 D/52D/53D (rear section) and 51 E/52E/53E (left section), the last front section has been omitted for a mere clarity reason of the drawing. Each section 51A/52A/53A, 51 B/52B/53B, 51C/52C/53C, 51 D/52D/53D and 51 E/52E/53E comprises an insulation panel 51 that integrates heating elements 52 and a temperature sensor 53 on its internal surface. The sections are secured on each face of the skid 55 so as to form a chamber sealed relatively to the outside harsh environment. The chamber may be filled with a gas 54 or pumped to a low or medium vacuum.

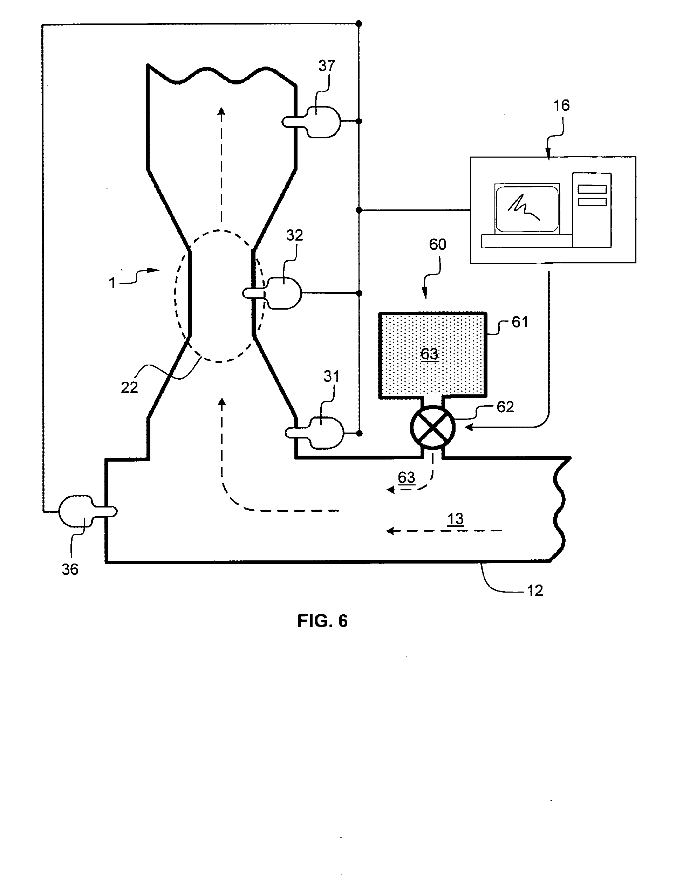

FIG. 6 schematically illustrates a chemical injection arrangement 60 associated with the multiphase flow meter 1 and/or the surface flow line 12. In the present example, the chemical injection arrangement 60 is positioned upstream the measurement section 22 of the multiphase flow meter 1. The chemical injection arrangement 60 comprises a vessel 61 and a valve 62. The vessel 61 is filled in with a chemical product 63 for inhibiting hydrocarbon based deposition into the multiphase fluid mixture 13. The chemical injection arrangement 60 is used during the implementation of the active prevention measures as explained hereinafter. The valve 62 is coupled to the control and data acquisition arrangement 16 that initiates and controls the quantity of chemical product 63 to be injected from the vessel 61 into the surface flow line 12.

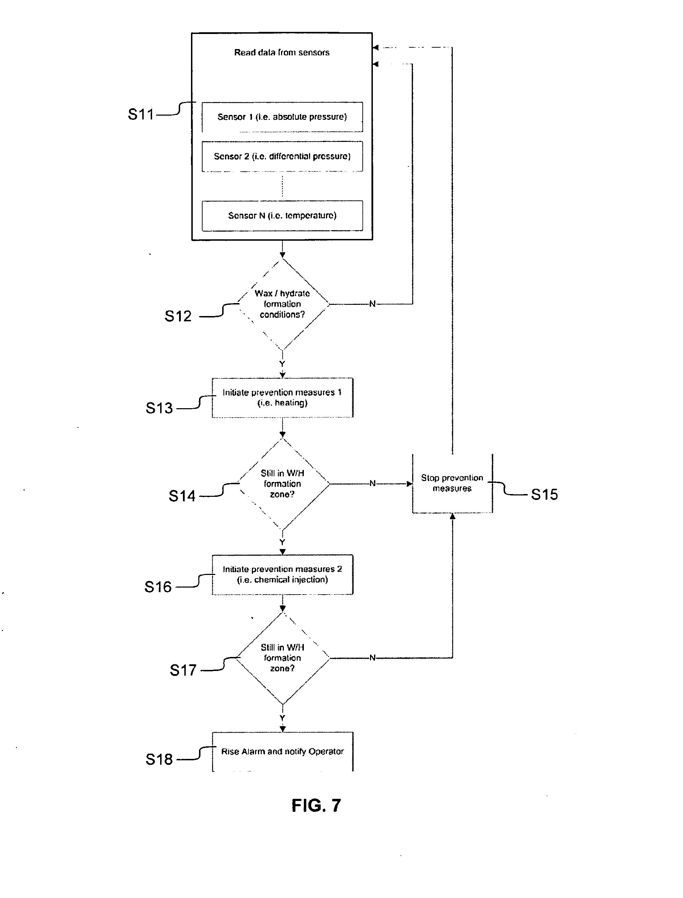

FIG. 7 schematically illustrates an embodiment of the method for preventing hydrate and wax formation.

In a first step S1, the various measurements (absolute pressure, differential pressure, temperature, attenuations, etc...) provided by the various sensors (31, 32, 33, 36, 37, 41, 42, 53) are collected, transmitted and analyzed to the control and data acquisition arrangement 16.

In a second step S12, the control and data acquisition arrangement 16 determines whether conditions exist for the formation of hydrate and/or wax. If such conditions do not exist (branch N), the measurement and transmission steps are repeated over time (step S11).

If such conditions do exist (branch Y), in a third step S13, a first prevention measure is initiated. As an example, the first prevention measure that may be initiated comprises heating at least a portion of the pipe section 21, or of the measurement section 22, or the multiphase flow meter 1, or the sensors 41, 42 or the valve 43, or a combination of these elements (see FIGS. 4 and 5).

In a fourth step S14, the control and data acquisition arrangement 16 determines whether conditions for the formation of hydrate and/or wax still exist after a given delay of implementation of the first prevention measure. If such conditions do not exist anymore (branch N), the first prevention measure are stopped in a fifth step S15 and the measurement and transmission steps are repeated over time (step S11).

If such conditions do still exist (branch Y), in a sixth step S16, a second prevention measure is initiated. As an example, the second prevention measure that may be initiated comprises injecting the chemical product 63 inhibiting hydrate and/or wax formation into the multiphase fluid mixture 13 (see FIG. 6). The first and second prevention measures may be cumulatively implemented.

Alternatively, the prevention measures may also comprise actively regulating the pressure within the pipe section by means of automatically controlled chokes (for example by means of the control valve 43). This provide the ability to drop or raise the pressure in the surface flow line and pipe section in order to avoid plugging the multiphase flow meter.

In a seventh step S17, the control and data acquisition arrangement 16 determines whether conditions for the formation of hydrate and/or wax still exist after a given delay of implementation of the second prevention measure. If such conditions do not exist anymore (branch N), the second prevention measure are stopped according to the fifth step S15 and the measurement and transmission steps are repeated over time (step S11). When the first and second prevention measures are cumulatively implemented, both are stopped.

In this manner, the prevention measures are stopped only when the multiphase fluid mixture is caused to be outside the hydrate and/or wax formation zone.

If such conditions do still exist (branch Y), in an eighth step S18, an alarm notification indicating the possible ineffectiveness of the prevention measure is issued by the control and data acquisition arrangement 16 to an operator. The operator may then take appropriate emergency actions.

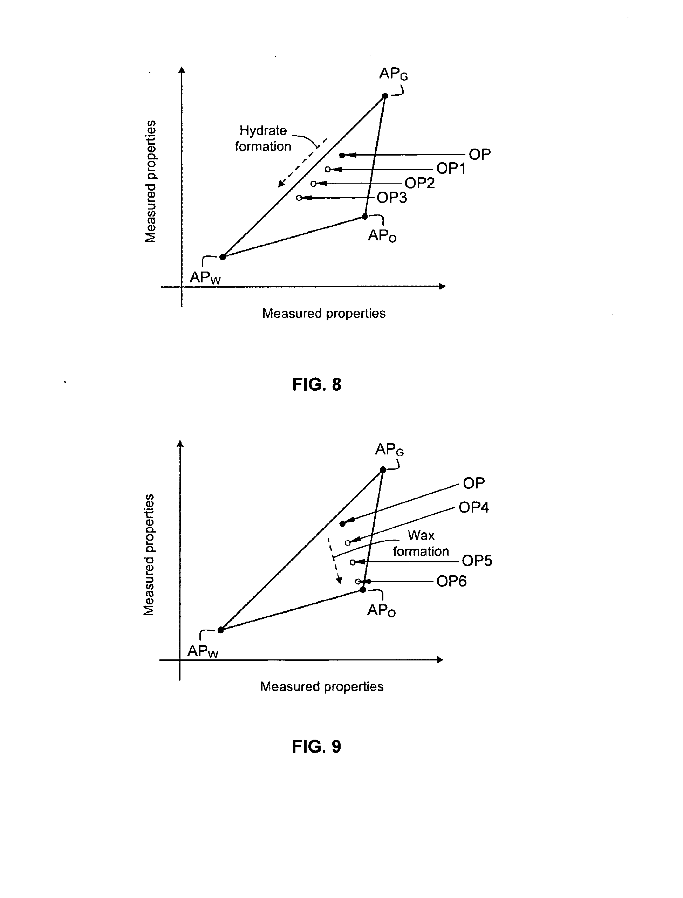

FIGS. 8 and 9 graphically illustrate how displacements of the operation point OP in the multiphase fraction solution triangle are used to detect the appearance of hydrate formation and wax formation, respectively. Based on detecting over time a shift of the operating point and whether a variation of the differential pressure is outside a differential pressure range, the control and data acquisition arrangement 16 determines whether conditions for the formation of hydrate and/or wax exist. In particular, FIGS. 8 and 9 illustrate the solution triangle for dual energy spectral gamma ray hold-up measurements (x-axis may be the low energy linear attenuation and y-axis may be high energy linear attenuation as measured properties) in the increasing presence of hydrate (FIG. 8) and/or wax (FIG. 9). The triangle is obtained by drawing three lines that connect every two of the three operating points of the fluid for water, oil and gas, namely the apexes of the triangle AP_{W}, AP_{O} and AP_{G}, respectively. The oil/water/gas apex respectively represent either oil/water/gas reference point, or oil/water/gas calibration point, or oil/water/gas attenuation property, etc...

The hydrate and/or wax formation results in decreasing the pipe section 21 diameter. This is particularly true at the measurement section 22 of the Venturi throat. According to an embodiment of the prevention method, it is proposed to correlate absolute and differential pressure measurements at the moment of formation of the hydrate and/or wax in the multiphase flow meter. Further, since water is one of the major hydrate components, the moment of hydrate formation and conglomeration in the measurement section 22 is detected using the attenuation measurement provided by the fraction meter of the multiphase flow meter itself. Incidentally, a shift of the operating point OP towards a water-rich area OP1, OP2, OP3 namely a shift towards the water apex AP_{W} (see FIG. 8) in the solution triangle indicates hydrate formation. Furthermore, a similar behavior is observed in the case of wax formation and conglomeration in the measurement section 22. Incidentally, a shift of the operating point OP towards an oil-rich area OP4, OP5, OP6 namely a shift towards the oil apex AP_{O} (see FIG. 9) in the solution triangle indicates wax formation and conglomeration. When a correlation between said shift of the operating point in the solution triangle and the building-up of the absolute pressure and/or the depletion/smothering of the differential pressure measurements is observed, the control and data acquisition arrangement 16 determines that conditions for the formation of hydrate and/or wax exist. The control and data acquisition arrangement 16 may also correlate said operating point shift and said pressure variation to temperature measurement.

The method and arrangement for preventing hydrocarbon based deposition enable maintaining the flow rate determination accuracy by taking appropriate prevention measures that aim at avoiding, at least significantly reducing the precipitation and deposition of hydrate and wax in extremely low temperature conditions. Thus, the risk for the multiphase flow meter to provide incoherent measurements leading to, for example, overestimation of the production flow rate, or water cut level, etc... is avoided, at least significantly reduced.

It should be appreciated that embodiments of the present invention are not limited to onshore hydrocarbon wells and can also be used offshore or in subsea applications. Furthermore, although some embodiments have drawings showing a horizontal well bore and a vertical well bore, said embodiments may also apply to a deviated well bore. All the embodiments of the present invention are equally applicable to cased and uncased borehole (open hole). The present invention finds advantageous, though non limitative, applications in the oilfield industry, including various hydrocarbon exploration and production related applications, for example permanent well monitoring applications wherein several measuring apparatuses are positioned at various locations in the field, mobile testing, laboratory testing, artificial lift optimization, surface or subsea locations, etc.... Those of ordinary skill in the art will recognize that these are merely examples of possible uses. Although particular applications of the present invention relate to the oilfield industry, other applications to other industry, for example the mining industry or the like also apply.

It should be appreciated that the multiphase fluid mixture that has been described is composed of oil, gas and water, but the present invention is not limited in this respect to this composition.

It should be appreciated that embodiments of the present invention are not limited to a fraction meter as a gamma or x-ray densitometer, other fraction meter may be used like for example microwave based fraction measurement device.

Although a drawing shows different functional entities as different blocks, this by no means excludes implementations in which a single entity carries out several functions, or in which several entities carry out a single function. In this respect, the drawings are very diagrammatic.

Thus, the drawings and their description hereinbefore illustrate rather than limit the present invention.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. Method for preventing hydrocarbon based deposition in a multiphase fluid mixture flowing in a pipe section, said mixture being susceptible to the formation of hydrate and wax under given thermodynamic conditions, comprising:
- flowing the multiphase fluid mixture (13) in a pipe section (21) having a measurement section (22);
- irradiating the multiphase fluid mixture (13) flowing into the measurement section (22) with a radiation having a spectrum comprising at least two distinct energy levels;
- measuring (S11) the attenuation of the radiation transmitted through the measurement section (22) of the multiphase fluid mixture (13);
- estimating a solution triangle and an operating point (OP) based on said attenuation measurements, said solution triangle comprising an oil apex (AP_{O}) and a water apex (AP_{W});
- measuring a differential pressure of the multiphase fluid mixture in the measurement section (22);
- repeating over time the attenuation and pressure measurement steps, and solution triangle and operating point estimation step;
wherein the method for preventing hydrocarbon based deposition further comprises:
- detecting over time a shift of the operating point towards said oil or water apex in dependence on the hydrocarbon based deposition;
- detecting over time whether a variation of the differential pressure is outside a differential pressure range, respectively; and
- initiating at least one prevention measure (S13, S16) when detecting a correlation between said shift of the operating point (OP) towards oil or water apex and the differential pressure being outside the differential pressure range (S12, S14, S17).

2. The method for preventing hydrocarbon based deposition of claim 1, wherein initiating the prevention measure comprises heating at least a portion of the pipe section (21).

3. The method for preventing hydrocarbon based deposition of claim 1 or 2, wherein initiating the prevention measure comprises injecting a chemical product (63) inhibiting hydrocarbon based deposition into the multiphase fluid mixture (13).

4. The method for preventing hydrocarbon based deposition of claim 3, wherein said chemical product (63) is injected upstream the measurement section (22).

5. The method for preventing hydrocarbon based deposition according to anyone of the preceding claims, further comprising stopping the prevention measure when the multiphase fluid mixture is caused to be outside a hydrocarbon based deposition range.

6. The method for preventing hydrocarbon based deposition according to anyone of the preceding claims, wherein the hydrocarbon based deposition results from hydrate formation in the multiphase fluid mixture.

7. The method for preventing hydrocarbon based deposition according to anyone of the preceding claims, wherein the hydrocarbon based deposition results from wax or asphaltene formation in the multiphase fluid mixture.

8. The method for preventing hydrocarbon based deposition according to anyone of the preceding claims, wherein the two distinct energy levels are chosen among the energy levels 32 keV, 81 keV and 356 keV provided by a nuclear chemical source made of barium isotope Ba133.

9. Application of the method for preventing hydrocarbon based deposition according to anyone of the preceding claims to the production of hydrocarbon in arctic conditions.

10. An arrangement for preventing hydrocarbon based deposition in a multiphase fluid mixture flowing in a pipe section, said mixture being susceptible to the formation of hydrate and wax under given thermodynamic conditions, comprising:
- a radiation source (33) arranged to emit a radiation having a spectrum comprising at least two distinct energy levels;
- a pipe section (21) through which the multiphase fluid mixture (13) flows comprising a measurement section (22), said measurement section (22) being coupled to said radiation source (33);
- a detector (34) coupled to said measurement section (22) and arranged to detect the radiation that has passed through said multiphase fluid mixture (13), the detector (34) providing attenuation measurements;
- pressure measurement sensor for measuring a differential pressure of the multiphase fluid mixture in the measurement section (22);
- prevention means for causing the multiphase fluid mixture to be outside a hydrocarbon based deposition range;
wherein the detector and sensor are coupled to a control and data acquisition arrangement (16) arranged to estimate a solution triangle and an operating point (OP) based on said attenuation measurements, said solution triangle comprising an oil apex (AP_{O}) and a water apex (AP_{W}), and to activate said prevention means when detecting a correlation between a shift of said operating point towards oil or water apex and the differential pressure being outside a differential pressure range.

11. The arrangement for preventing hydrocarbon based deposition of claim 10, wherein the prevention means comprises a thermal management arrangement (50) comprises an insulation housing (51) and heating elements (52) for insulating and heating at least the measurement section (22).

12. The arrangement for preventing hydrocarbon based deposition of claim 10 or 11, wherein the prevention means comprises a chemical injection arrangement (60) injecting a chemical product (63) inhibiting hydrocarbon based deposition into the multiphase fluid mixture (13).

13. The arrangement for preventing hydrocarbon based deposition of claim 12, wherein the prevention means is positioned upstream the measurement section (22).

14. The arrangement for preventing hydrocarbon based deposition according to anyone of the claims 10 to 13, wherein the measurement section (28) is selected from the group consisting of: a Venturi, a V-cone, an orifice plate, and a measurement section having a geometry with a variable cross section area.

15. The arrangement for preventing hydrocarbon based deposition according to anyone of the claims 10 to 14, wherein the radiation source (33) is a nuclear chemical source or an x-ray generator.

16. The arrangement for preventing hydrocarbon based deposition according to anyone of the claims 10 to 15, wherein the radiation source (33) is made of barium isotope Ba133 emitting at three distinct energy levels 32 keV, 81 keV and 356 keV.

17. The arrangement for preventing hydrocarbon based deposition according to anyone of the claims 10 to 16, wherein the multiphase fluid mixture (13) is a hydrocarbon effluent comprising gas, oil, and water.
